# FASCICULE DE BREVET EUROPEEN

(11) **EP 1 926 662 B1**
(45) Date de publication et mention de la délivrance du brevet: **08.04.2009**
(21) Numéro de dépôt: 06808180.1
(22) Date de dépôt: 21.09.2006
(51) Int. Cl.: B64F 5/00, G05B 23/02, G01C 23/00, B64C 13/00

(54) **PROCEDE ET DISPOSITIF POUR REALISER AU MOINS UN ESSAI EN VOL SUR UN AERONEF ET APPLICATIONS**
VERFAHREN UND VORRICHTUNG ZUR DURCHFÜHRUNG MINDESTENS EINES FLUGTESTS AN EINEM FLUGZEUG UND VERWENDUNG DAVON
METHOD AND DEVICE FOR CARRYING OUT AT LEAST ONE FLIGHT TESTING ON AN AIRCRAFT AND THE USE THEREOF

(30) Priorité: 22.09.2005 FR 0509662
(43) Date de publication de la demande: 04.06.2008
(73) Titulaire: AIRBUS France, 31060 Toulouse Cédex (FR)
(72) Inventeur: SEREN, Cédric, F - 31400 Toulouse (FR); BOMMIER, François, F-31820 Pibrac (FR); VERDIER, Laurent, F-31380 Montpitol (FR)
(74) Mandataire: Hauer, Bernard
(86) Numéro de dépôt international: PCT/FR2006/002158
(87) Numéro de publication internationale: WO 2007/034079

(56) Documents cités:
- EP-A- 0 999 484
- EP-A- 1 139 190
- EP-A- 1 396 421
- EP-A- 1 538 785
- US-A1- 2004 267 478
- US-A1- 2005 096 801
- US-B1- 6 216 063
- PATENT ABSTRACTS OF JAPAN vol. 1995, no. 07, 31 août 1995 (1995-08-31) -& JP 07 096896 A (KOKUSAI ELECTRIC CO LTD), 11 avril 1995 (1995-04-11)

## Description

La présente invention concerne un procédé et un dispositif pour réaliser au moins un essai en vol sur un aéronef, un procédé pour réaliser un protocole d'une pluralité d'essais, ainsi qu'une méthode d'identification de phénomènes-aérodynamiques sur un aéronef utilisant un tel procédé.

Le domaine d'application de l'invention concerne l'identification de la mécanique du vol d'un aéronef, c'est-à-dire la comparaison des mouvements réels d'un aéronef avec la modélisation de ces derniers ainsi que, le cas échéant, l'ajustement de paramètres du modèle utilisé pour atteindre une fidélité optimale de ce modèle.

Pour ce faire, on met en oeuvre un protocole d'essais qui indique, de façon générale, une manière de réaliser des essais en vol dans un but déterminé. A cet effet, on définit, de façon usuelle, une série de séquences prédéfinies de braquages de gouverne. Dans le cas de la mécanique du vol, tes protocoles sont constitués, de façon usuelle, d'essais en vol uniquement réalisés en boucle ouverte sur l'aéronef, c'est-à-dire qu'aucun système de contrôle d'attitude de l'aéronef n'est enclenché au cours de ces essais. Dans le cas particulier où l'aéronef est naturellement instable, on prévoit simplement un système de contrôle qui est limité à un stabilisateur minimal. Les protocoles sont réalisés sous forme de campagnes d'essais. Au cours de ces essais, des séquences-de commande prédéfinies sont appliqués à l'aéronef. Les commandes appliquées, ainsi que les sorties résultantes, sont mesurées sur l'aéronef et sont enregistrées. Elles sont traitées a posteriori. Les commandes réelles mesurées sur l'aéronef au cours des essais en vol sont repassées sur un modèle de simulation. Les sorties réelles mesurées sur l'aéronef sont ensuite comparées aux sorties du modèle de simulation. Un recalage de- certains effets peut alors être effectué. La qualité (précision, ...) de l'identification (de la mécanique du vol) dépend de la qualité (précision, ...) de chacune des étapes précitées. On notera que la présente invention porte essentiellement sur l'amélioration de la première étape, à savoir le protocole d'essais.

Comme indiqué précédemment, la caractéristique fondamentale d'un protocole d'essais usuel réside dans le fait qu'il est composé d'essais en vol entièrement réalisés en boucle ouverte, les systèmes de contrôle d'attitude de l'aéronef étant désactivés. Les -ordres d'entrée lors de chaque essai sont directement envoyés aux gouvernes de façon automatique, indépendamment des mouvements de l'aéronef. Ces ordres de gouverne sont tous définis sous forme de créneaux et permettent d'exciter l'aéronef.

On notera qu'un protocole d'essais précise les gouvernes qui vont être sollicitées en vol lors des essais, le niveau de braquage auquel ces gouvernes vont être soumises, la durée de braquage, ainsi que le point de vol auquel les essais vont être réalisés.

Toutefois, avec un tel protocole d'essais usuel, et bien que les commandes appliquées soient différentes à chaque essai, les courbes de sortie présentent toutes des dynamiques similaires. Une analyse plus approfondie permet de mettre en évidence que la réponse de l'aéronef est conforme à un mode dominant qui empêche de distinguer les autres phénomènes de la mécanique du vol de l'aéronef. Ce mode dominant intervient sur toutes les sorties. Ainsi, tous les effets aérodynamiques se trouvent corrélés. Ce mode dominant entrave l'observabilité de tous les effets. Plus précisément, ce mode dominant correspond à une combinaison d'effets aérodynamiques et empêche de pouvoir séparer de façon précise les différents effets et-de pouvoir les caractériser individuellement. Par conséquent, les sollicitations en entrée de l'aéronef, lors d'un tel protocole d'essais-usuel, sont pauvres pour l'identification de tous les phénomènes aérodynamiques de l'aéronef.

La présente invention a pour but d'engendrer une amélioration globale de l'observabilité des différents phénomènes de la mécanique du vol, pour obtenir une meilleure qualité du recalage précité et/ou une réduction de la durée des essais en vol qui sont utilisés pour l'identification d'un modèle de la mécanique du vol.

On notera que l'augmentation de l'observabilité de certains -effets est devenu nécessaire pour améliorer les méthodes usuelles d'identification de phénomènes aérodynamiques. En outre, une réduction du cycle des campagnes d'essais permet de limiter les coûts engagés. Ce dernier objectif peut se traiter au niveau des protocoles expérimentaux par une réduction de la durée des essais en vol. Par conséquent, la présente invention cherche notamment à identifier les phénomènes de la mécanique du vol de façon plus précise, à partir d'un protocole comportant un nombre réduit d'essais.

Pour ce faire, la présente invention concerne, en premier lieu, un procédé pour réaliser au moins un essai en vol sur un aéronef, en particulier un avion de transport.

Le document EP-A-0 999 484 décrit un procédé selon lequel :
a) on engendre au moins un ordre de braquage à appliquer à au moins une gouverne de l'aéronef ;
b) on applique, lors-d'un-vol dudit aéronef, ledit ordre de braquage à ladite gouverne qui est susceptible d'être braquée- de manière à agir sur au moins un axe de pilotage de l'aéronef et qui comporte au moins un actionneur pour braquer ladite gouverne en fonction d'au moins un ordre de braquage, ledit ordre- de braquage illustrant une évolution du braquage en fonction du temps ;
c) on mesure au moins une courbe de sortie illustrant l'évolution en fonction du temps d'un mouvement de l'aéronef, en réponse à l'application dudit ordre de braquage à la gouverne lors du vol ; et
d) on enregistre l'ordre de braquage appliqué à la gouverne, ainsi que la courbe de sortie correspondante mesurée.

Selon l'invention, ledit procédé est remarquable en ce que :
- à l'étape a) :
   ■ on reçoit au moins une consigne de sortie permettant d'obtenir au moins une courbe de sortie qui est identifiante pour au moins un effet aérodynamique de l'aéronef ; et
   ■ on engendre au moins un ordre de braquage de gouverne qui est induit par ladite consigne de sortie reçue ; et
- on asservit l'aéronef en vol de manière à obtenir et maintenir sur ledit aéronef ladite courbe de sortie identifiante, lors de l'application dudit ordre de braquage induit par ladite consigne de sortie.

Ainsi, grâce à l'invention, on modifie l'entrée (de l'essai) pour obtenir au moins un ordre de braquage de gouverne qui est susceptible d'isoler au moins un effet aérodynamique particulier, par rapport à d'autres, dans la ou les réponses temporelles recueillies en sortie de l'essai en vol. Ceci est obtenu en prenant en compte une consigne de sortie qui illustre une courbe de sortie permettant de rendre -plus identifiable au moins un effet aérodynamique, c'est-à-dire permettant d'isoler individuellement ledit effet aérodynamique de manière à pouvoir en déduire ses caractéristiques. Ainsi, la sortie n'évolue plus selon un mode dominant comme précité, mais selon une évolution maîtrisée.

Dans un mode de réalisation préféré, à l'étape a), on reçoit également au moins un ordre de braquage de gouverne qui est appliqué tel quel à ladite gouverne.

Ainsi, on prend en compte, lors des essais, au moins un ordre de braquage usuel, qui pilote directement la gouverne, et au moins un ordre de braquage induit par une consigne de sortie, qui pilote la sortie.

Avantageusement, pour engendrer l'ordre de braquage représentatif de la consigne de sortie et pour réaliser l'asservissement, on utilise des moyens qui sont formés à partir d'une théorie dite de la commande modale, précisée ci-dessous.

Par ailleurs, de façon avantageuse, pour réaliser un essai, on met en oeuvre lesdites étapes a) à d) et ledit asservissement pour une-pluralité de gouvernes différentes de l'aéronef.

La présente invention concerne également un dispositif pour réaliser au moins un essai sur un aéronef, en particulier un avion.

Le document EP-A-0 999 484 décrit un dispositif du type comportant :
- au moins une gouverne de l'aéronef, susceptible d'être braquée de manière à agir sur au moins un axe de pilotage de l'aéronef lors d'un vol et comportant au moins un actionneur pour braquer ladite gouverne en fonction d'au moins un ordre de braquage reçu, qui illustre une évolution du braquage en fonction du temps ;
- une unité de commande pour transmettre audit actionneur au moins un ordre de braquage à appliquer à ladite gouverne ;
- des moyens pour mesurer au- moins une courbe de sortie illustrant l'évolution en fonction du temps d'un mouvement de l'aéronef, en réponse à l'application en vol d'un ordre de braquage à la gouverne ; et
- des moyens pour enregistrer au moins un ordre de braquage appliqué à la gouverne et la courbe de sortie correspondante mesurée.

Selon l'invention, ledit dispositif est remarquable en ce que :
- ladite unité de commande comporte :
   ■ au moins un premier moyen susceptible de recevoir au moins une consigne de sortie permettant d'obtenir au moins une courbe de sortie qui est identifiante pour au moins un effet aérodynamique de l'aéronef ; et
   ■ au moins un second moyen pour engendrer au moins un ordre de braquage de gouverne qui est induit par ladite consigne de sortie transmise par ledit premier moyen ; et
- ledit dispositif comporte, de plus, au moins un moyen d'asservissement pour asservir l'aéronef de manière à obtenir et maintenir sur ledit aéronef ladite courbe de sortie identifiante, lorsque l'ordre de braquage correspondant engendré par ledit second moyen est appliqué à la gouverne..

Ainsi, grâce audit moyen d'asservissement, le dispositif conforme à l'invention permet de réaliser un essai en boucle fermée.

Dans un mode de réalisation préféré, ladite unité de commande comporte, de plus, un troisième moyen pour recevoir au moins un ordre de braquage de gouverne qui est transmis tel quel à l'actionneur de la gouverne.

En outre, avantageusement, ladite gouverne correspond à l'un des éléments suivants de l'aéronef :
- un spoiler ;
- un aileron ;
- un plan horizontal ;
- une gouverne de profondeur ; et
- une gouverne de direction.

La présente invention-concerne également un procédé pour réaliser un protocole de n essais sur un aéronef.

Selon l'invention, ce procédé est remarquable en ce que :
- dans une étape préliminaire (antérieure au vol d'essai), on détermine m ordres de braquage de gouverne devant être appliqués directement à l'aéronef et p consignes de sortie permettant d'isoler au moins un effet aérodynamique de l'aéronef dans la réponse temporelle de ce dernier, qui est illustrée par au moins une courbe de sortie, m et p étant des entiers tels que m + p = n ;
- on réalise, au cours au moins d'un vol (d'essai) ultérieur de l'aéronef, n essais en appliquant respectivement lesdits m ordres de braquage et lesdites p consignes de sortie, ces dernières étant également appliquées sous forme d'ordres de braquage représentatifs, lesdits n essais étant réalisés au moins partiellement en mettant en oeuvre le procédé précité conforme à l'invention ou en utilisant le dispositif précité conforme à l'invention ; et
- pour chacun desdits n essais, on enregistre l'ordre de braquage appliqué, et on mesure et on enregistre g courbes de sortie correspondantes, g étant un entier.

Par ailleurs, la présente invention concerne également une méthode d'identification de phénomènes aérodynamiques sur un aéronef, à l'aide d'un simulateur de vol, à savoir une méthode selon laquelle :
A/ on réalise au moins un protocole de n essais en vol, n étant un entier, permettant d'obtenir une pluralité de n courbes d'entrée réelles représentant des ordres de braquage réellement appliqués à l'aéronef et une pluralité de courbes de sortie réelles associées ;
B/ on applique lesdites n courbes d'entrée réelles audit simulateur de vol ;
C/ on mesure sur ledit simulateur de vol les courbes de sortie correspondantes obtenues en réponse à l'application desdites n courbes d'entrées réelles ;
D/ on compare, deux à deux, lesdites courbes de sortie réelles et lesdites courbes de sortie correspondantes émises par ledit simulateur de vol-; et
E/ en fonction de cette comparaison, on affine un modèle de simulation utilisé par ledit simulateur de vol.

Selon l'invention, cette méthode d'identification est remarquable en ce qu'à l'étape A/, on met en oeuvre le procédé précité conforme à l'invention, qui est destiné à réaliser un protocole dé n essais en vol sur un aéronef.

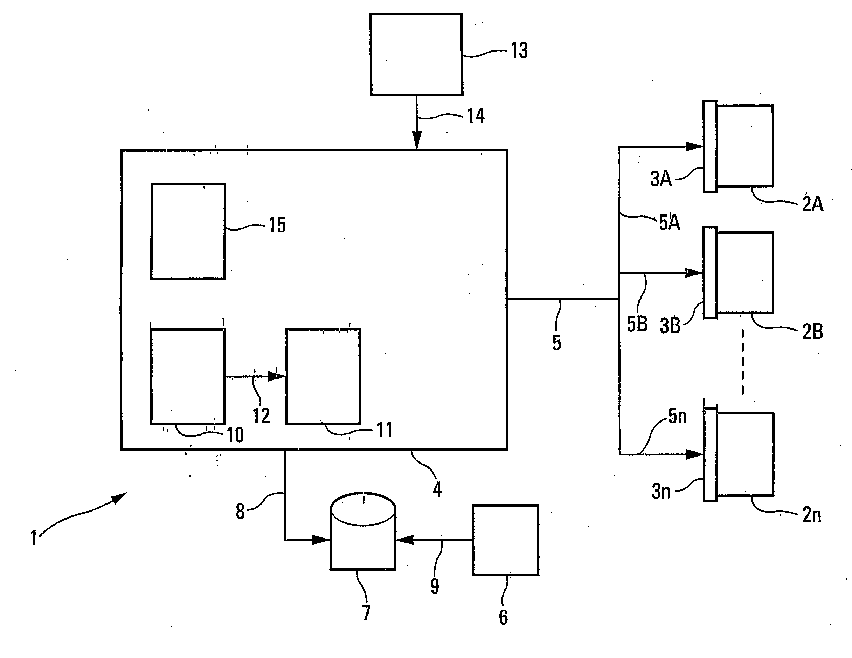

L'unique figure du dessin annexé fera bien comprendre comment l'invention peut être réalisée. Cette figure unique-est le schéma synoptique d'un dispositif conforme à l'invention.

Le dispositif 1 conforme à l'invention et représenté schématiquement sur la figure, est destiné à réaliser au moins un essai en vol sur un aéronef non représenté, en particulier un avion de transport.

Pour ce faire, ledit dispositif 1 comporte :
- au moins une gouverne 2A, 2B, ... 2n usuelle de l'aéronef, qui est susceptible d'être braquée en vol de manière à agir sur au moins un axe de pilotage (lacet, roulis, tangage) de l'aéronef. Cette gouverne 2A, 2B, ... 2n comporte au moins un actionneur 3A, 3B, ... 3n usuel, pour braquer ladite gouverne 2A, 2B, ... 2n en fonction d'au moins un ordre de- braquage reçu. Un ordre de braquage est défini, dans le cadre de la présente invention, par une courbe représentant une évolution de l'amplitude du braquage en fonction du temps ;
- une unité de commande 4 qui est reliée par l'intermédiaire d'au moins une liaison 5A, 5B, ... 5n (faisant partie d'une liaison générale 5) audit actionneur 3A, 3B, ... 3n et qui est formée pour transmettre audit actionneur 3A, 3B, ... 3n au moins un ordre de braquage à appliquer à ladite gouverne 2A, 2B, ... 2n ;
- des moyens 6 usuels, pour mesurer au moins une courbe de sortie. Dans le cadre de la présente invention, une -courbe de sortie illustre l'évolution en fonction du temps d'un mouvement (dérapage, lacet, roulis, gite, cap, facteur de charge, ....) de l'aéronef, en réponse à l'application en vol d'un ordre de braquage à la gouverne 2A, 2B, ... 2n ; et
- des moyens 7 qui sont reliés par l'intermédiaire de liaisons 8 et 9 respectivement à l'unité de commande 4 et aux moyens 6 et qui sont destinés à enregistrer sur un support d'enregistrement usuel (non représenté spécifiquement), au moins :
   ■ un ordre de braquage qui est appliqué réellement à le gouverne 2A, 2B, ... 2n (par l'intermédiaire de l'unité de commande 4 et de l'actionneur 3A, 3B, ... 3n) ; et
   ■ la courbe de sortie correspondante qui est mesurée par les moyens 6.

De plus, selon l'invention :
- ladite unité de commande 4 comporte :
   ■ au moins un moyen 10 susceptible de recevoir au moins une consigne de sortie permettant d'obtenir au moins une courbe de sortie qui est identifiante pour au moins un effet aérodynamique (dérapage, lacet, roulis, gîte, cap, facteur de charge, ...) de l'aéronef. Ce moyen 10 peut par exemple être un moyen d'entrée, tel qu'un clavier par exemple, qui permet à un opérateur, en particulier un pilote d'essai, de lancer une séquence pré-enregistrée de ladite consigne de sortie dans ladite unité de commande 4 ; et
   ■ au moins un moyen 11 qui est relié- par l'intermédiaire d'une liaison 12 audit moyen 10, qui est réalisé sous forme d'une précommande P, et qui est formé pour engendrer au moins un ordre de-braquage de gouverne représentatif d'une consigne de sortie reçue dudit moyen 10. Ledit ordre de braquage de gouverne est destiné à être transmis à l'actionneur 3A, 3B, ... 3n ; et
- ledit dispositif 1 comporte de plus, au moins un moyen d'asservissement 13 qui est relié par l'intermédiaire d'une liaison 14 à ladite unité de commande 4, qui comprend un correcteur K, et qui est formé pour asservir l'aéronef de manière à obtenir et à maintenir sur ledit aéronef une courbe de sortie identifiante, lorsque l'ordre de braquage correspondant à cette courbe de sortie, qui est engendré par le moyen 11, est appliqué à la gouverne 2A, 2B, ... 2n. Ledit moyen d'asservissement 13 peut être intégré, au moins partiellement, dans ladite unité de commande 4.

Dans un mode de réalisation particulier, le capteur du moyen d'asservissement et les moyens de mesure 6 peuvent être les mêmes.

Ainsi, grâce à l'invention, on modifie l'entrée (de l'essai), afin d'obtenir au moins un ordre de braquage de gouverne qui est susceptible d'isoler au moins un effet aérodynamique particulier, par rapport à d'autres, dans les réponses temporelles recueillies en sortie de l'essai en vol. Ceci est obtenu en prenant en compte une consigne de sortie qui illustre une courbe de sortie permettant de rendre plus identifiable au moins un effet aérodynamique. Ainsi, la sortie n'évolue plus selon un mode dominant, mais selon une évolution maîtrisée.

Dans le cadre de la présente invention, une courbe de sortie est considérée comme identifiante, si elle permet d'identifier (c'est-à-dire de définir ou caractériser) un effet aérodynamique particulier de l'aéronef, à l'aide des valeurs mesurées et enregistrées par les moyens 7 lors de l'application à l'aéronef d'un ordre de braquage qui est représentatif de-cette courbe de sortie. En outre, on considère qu'un effet est complètement identifiable si, à partir des relevés temporels de référence issus d'un ou de plusieurs essais d'un protocole d'essais, il est possible de recaler toutes les courbes de simulation sur l'ensemble de ces relevés de référence par simple variation du coefficient associé dans le modèle à cet effet aérodynamique. Cette propriété d'identifiabilité peut se généraliser à plusieurs effets aérodynamiques.

Ladite unité de commande 4 comporte, de plus, un moyen 15 pour recevoir au moins un ordre de braquage de gouverne direct, qui est ensuite transmis tel quel à l'actionneur 3A, 3B, ... 3n de la gouverne 2A, 2B ... 2n, sans être modifié. Pour ce faire, ledit moyen 15 peut être un moyen d'entrée semblable ou identique audit moyen 10.

Dans un mode de réalisation particulier, ledit correcteur K (qui permet de réaliser les essais en boucle fermée) et ladite précommande P sont formés à partir d'une théorie usuelle dite de la commande modale. Cette théorie illustre une technique de synthèse de loi de commande. Les calculs mathématiques qui permettent de déterminer numériquement le correcteur K et la précommande P reposent sur une modification de la dynamique naturelle de l'aéronef, lorsque celui-ci se trouve asservi par le correcteur K et piloté par la précommande P. Le correcteur K et la précommande P forment un contrôleur.

Le dispositif 1 conforme à l'invention peut être formé pour commander une seule gouverne ou pour commander simultanément une pluralité de gouvernes lors d'un essai. -A titre d'illustration, une gouverne 2A, 2B, ... 2n à commander peut correspondre à l'un des éléments suivants de l'aéronef :
- un spoiler ;
- un aileron ;
- un plan horizontal ;
- une gouverne de profondeur ; et
- une gouverne de direction.

De préférence, le dispositif 1 conforme à l'invention est destiné à réaliser, non pas un seul essai, mais un protocole de n essais sur l'aéronef.

Pour réaliser un tel protocole de n essais, selon l'invention, on met en oeuvre les étapes suivantes :
- dans une étape préliminaire, on détermine m ordres de braquage de gouverne devant être appliqués directement à l'aéronef et p consignes de sortie permettant d'isoler au moins un effet aérodynamique de l'aéronef dans la réponse temporelle de ce dernier, qui est illustrée par au moins une courbe de sortie. Les entiers m et p sont tels que m + p = n ;
- on réalise, au cours au moins d'un vol ultérieur de l'aéronef, à l'aide du dispositif 1 conforme à l'invention, n essais en appliquant respectivement lesdits m ordres de braquage (reçus par le moyen 15) et lesdites p consignes de sortie (reçues par le moyen 10), ces dernières étant appliquées sous forme d'ordre de braquage représentatifs déterminés par le moyen 11 ; et
- pour chacun desdits n essais en vol dudit protocole d'essais :
   ■ on enregistre, à l'aide des moyens 7 dudit dispositif 1, l'ordre de braquage appliqué ; et
   ■ on mesure, à l'aide des moyens 6 dudit dispositif 1, q courbes de sortie associées, que l'on enregistre également à l'aide desdits moyens 7, q étant un entier.

Ainsi, grâce au dispositif 1 conforme à l'invention, on ne se restreint plus à envoyer aux actionneurs 3A, 3B, ... 3n des gouvernes, uniquement des ordres de gouverne usuels. Certaines sorties de l'aéronef sont pilotées et asservies sur des consignes de sortie (définies au cours de ladite étape préliminaire). Ces consignes de sortie sont formées de manière à être potentiellement identifiantes.

L'expérience montre que, grâce à l'invention, on obtient notamment les avantages suivants :
- le pilotage direct de certains états apparaissant en sortie engendre des mouvements effectifs sur toutes les gouvernes à la fois (approche multigouvernes) ;
- les courbes de sortie réelles (c'est-à-dire celles réellement obtenues à la sortie) sont très proches des courbes de sortie représentatives des consignes de sortie ; et
- on obtient une optimisation directe sur au moins une courbe de sortie, ce qui permet d'obtenir une bonne identification d'au moins un effet aérodynamique.

Pour ce faire, le dispositif 1 conforme à la présente invention réalise donc les opérations suivantes :
- asservir une ou plusieurs sorties sur des ordres (de consigne) apparaissant comme identifiants. L'asservissement est assuré par le correcteur K. Son rôle est de maintenir l'aéronef sur la ou les courbes de sortie correspondante ; et
- commander directement l'aéronef, non plus en ordres de braquage de gouverne comme dans les protocoles usuels, mais en ordres représentatifs de consignes de sortie qui portent donc directement sur les sorties. Ainsi, les entrées du protocole d'essais conforme à l'invention sont de deux types : des braquages de gouverne usuels portant sur les gouvernes 2A, 2B, ... 2n de l'aéronef, et des ordres de consigne de sortie. Cette commande directe en courbe de sortie est assurée par la précommande P qui transforme les consignes de sortie souhaitées en ordres de braquage pour les gouvernes 2A, 2B, ... 2n. Ainsi, on crée une distinction entre les entrées de gouverne usuelles d'une part et les sorties commandées d'autre part.

Une application préférée du dispositif 1 conforme à l'invention concerne son utilisation dans une méthode d'identification de phénomènes aérodynamiques sur un aéronef. Cette méthode présente notamment les étapes A/ à E/ suivantes :
A/ réaliser à l'aide dudit dispositif 1 au moins un protocole de n essais en vol, n étant un entier, permettant d'obtenir une pluralité de n courbes d'entrée réelles représentant des ordres de braquage réellement appliqués à l'aéronef et une pluralité de courbes de sortie réelles associées ;
B/ appliquer lesdites n courbes d'entrée réelles à un simulateur de vol ;
C/ mesurer sur le simulateur de vol les courbes de sortie correspondantes, obtenues en réponse à l'application desdites n courbes d'entrées réelles ;
D/ comparer, deux à deux, lesdites courbes de sortie réelles et lesdites courbes de sortie correspondantes émises par le simulateur de vol ; et
E/ en fonction de cette ou de ces comparaisons, affiner un -modèle de simulation utilisé par ledit simulateur de vol.

## Revendications

1. Procédé pour réaliser au moins un essai en vol sur un aéronef, procédé selon lequel :
a) on engendre au moins un ordre de braquage à appliquer à au moins une gouverne (2A, 2B, 2n) de l'aéronef ;
b) on applique, lors d'un vol dudit aéronef, ledit ordre de braquage à ladite gouverne (2A, 2B, 2n) qui est susceptible d'être braquée de manière à agir sur au moins un axe de pilotage de l'aéronef et qui comporte au moins un actionneur (3A, 3B, 3n) pour braquer ladite gouverne (2A, 2B, 2n) en fonction d'au moins un ordre de braquage, ledit ordre de braquage illustrant une évolution du braquage en fonction du temps ;
c) on mesure au moins une courbe de sortie illustrant l'évolution en fonction du temps d'un mouvement de l'aéronef, en réponse à l'application dudit ordre de braquage à la gouverne (2A, 2B, 2n) lors du vol ; et
d) on enregistre l'ordre de braquage appliqué à la gouverne (2A, 2B, 2n), ainsi que la courbe de sortie correspondante mesurée,
**caractérisé en ce que :**
- à l'étape a) :
■ on reçoit au moins une consigne de sortie permettant d'obtenir au moins une courbe de sortie qui est identifiante pour au moins un effet aérodynamique de l'aéronef ; et
■ on engendre au moins un ordre de-braquage de gouverne qui est induit par ladite consigne de sortie reçue ; et
- on asservit l'aéronef en vol de manière à obtenir et maintenir sur ledit aéronef ladite courbe de sortie identifiante, lors de l'application dudit ordre de braquage induit par ladite consigne de sortie.

2. Procédé selon la revendication 1,
**caractérisé en ce qu'**à l'étape a), on reçoit également au moins un ordre de braquage de gouverne qui est appliqué tel quel à ladite gouverne (2A, 2B, 2n).

3. Procédé selon l'une des revendications 1 et 2,
**caractérisé en ce que,** pour engendrer l'ordre de braquage induit par la consigne de sortie et pour réaliser l'asservissement, on utilise des moyens qui sont formés à partir d'une théorie dite de la commande modale.

4. Procédé selon l'une quelconque des revendications 1 à 3,
**caractérisé en ce que**, pour réaliser un essai, on met en oeuvre lesdites étapes a) à d) et ledit asservissement pour une pluralité de gouvernes (2A, 2B, 2n) de l'aéronef.

5. Dispositif pour réaliser au moins un essai sur un aéronef, ledit dispositif (1) comportant :
- au moins une gouverne (2A, 2B, 2n) de l'aéronef, susceptible d'être braquée de manière à agir sur au moins un axe de pilotage de l'aéronef lors d'un vol et comportant au moins un actionneur (3A, 3B, 3n) pour braquer ladite gouverne (2A, 2B, 2n) en fonction d'au moins un ordre de braquage reçu, qui illustre une évolution du braquage en fonction du temps ;
- une unité de commande (4) pour transmettre audit actionneur (3A, 3B, 3n) au moins un ordre de braquage à appliquer à ladite gouverne (2A, 2B, 2n) ;
- des moyens (6) pour mesurer au moins une courbe de sortie illustrant l'évolution en fonction du temps d'un mouvement de l'aéronef, en réponse à l'application en vol d'un ordre de braquage à la gouverne (2A, 2B, 2n) ; et
- des moyens (7) pour enregistrer au moins un ordre de braquage appliqué à la gouverne (2A, 2B, 2n) et la courbe de sortie correspondante mesurée,
**caractérisé en ce que :**
- ladite unité de commande (4) comporte :
■ au moins un premier moyen (10) susceptible de recevoir au moins une consigne de sortie permettant d'obtenir au moins une courbe de sortie qui est identifiante pour au moins un effet aérodynamique de l'aéronef ; et
■ au moins un second moyen (11) pour engendrer au moins un ordre de braquage de gouverne qui est induit par ladite consigne de sortie transmise par ledit premier moyen (10) ; et
- ledit dispositif (1) comporte, de plus, au moins un moyen d'asservissement (13) pour asservir l'aéronef de manière à obtenir et maintenir sur ledit aéronef ladite courbe de sortie identifiante, lorsque l'ordre de braquage correspondant engendré par ledit second moyen (11) est appliqué à la gouverne (2A, 2B, 2n).

6. Dispositif selon la revendication 5,
**caractérisé en ce que** ladite unité de commande (4) comporte, de plus, un troisième moyen (15) pour recevoir au moins un ordre de braquage de gouverne qui est transmis tel quel à l'actionneur (3A, 3B, 3n) de la gouverne (2A, 2B, 2n).

7. Dispositif selon l'une des revendications 5 et 6,
**caractérisé en ce que** ladite gouverne (2A, 2B, 2n) correspond à l'un des éléments suivants de l'aéronef :
- un spoiler ;
- un aileron ;
- un plan horizontal ;
- une gouverne de profondeur ; et
- une gouverne de direction.

8. Procédé pour réaliser un protocole de n essais en vol sur un aéronef, n étant un entier supérieur à 1,
**caractérisé en ce que :**
- dans une étape préliminaire, on détermine m ordres de braquage de gouverne devant être appliqués directement à l'aéronef et p consignes de sortie permettant d'isoler au moins un effet aérodynamique de l'aéronef dans la réponse temporelle de ce dernier, qui est illustrée par au moins une courbe de sortie, m et p étant des entiers tels que m + p = n ;
- on réalise, au cours au moins d'un vol ultérieur de l'aéronef, n essais en appliquant respectivement lesdits m ordres de braquage et lesdites p consignes de sortie, ces dernières étant également appliquées sous forme d'ordres de braquage représentatifs, lesdits n essais étant réalisés en mettant en oeuvre le procédé spécifié sous l'une quelconque des revendications 1 à 4 ou en utilisant le dispositif spécifié sous l'une quelconque-des revendications 5 à 7 ; et
- pour chacun desdits n essais, on enregistre l'ordre de braquage appliqué, et on mesure et on enregistre q courbes de sortie correspondantes, q étant un entier.

9. Méthode d'identification de phénomènes-aérodynamiques sur un aéronef, à l'aide d'un simulateur de vol, méthode selon laquelle :
A/ on réalise au moins un protocole de n essais en vol, n étant un entier, permettant d'obtenir une pluralité de n courbes d'entrée réelles représentant des ordres de braquage réellement appliqués à l'aéronef et une pluralité de courbes de sortie réelles associées ;
B/ on applique lesdites n courbes d'entrée réelles audit simulateur de vol ;
C/ on mesure sur ledit simulateur de vol les courbes de sortie correspondantes obtenues en réponse à l'application desdites n courbes d'entrées réelles ;
D/ on compare, deux à deux, lesdites courbes de sortie réelles et lesdites courbes de sortie correspondantes émises par ledit simulateur de vol ; et
E/ en-fonction-de cette comparaison, on affine un modèle de simulation utilisé par ledit simulateur de vol,
**caractérisé en ce qu'**à l'étape A/, on met en oeuvre le procédé spécifié sous la revendication 8.

## Claims

1. A method for carrying out at least one in-flight trial on an aircraft, according to which method:
a) at least one deflection order to be applied to at least one airfoil (2A, 2B, 2n) of the aircraft is generated;
b) said deflection order is applied, during a flight of said aircraft, to said airfoil (2A, 2B, 2n) which is capable of being deflected so as to act on at least one piloting axis of the aircraft and which comprises at least one actuator (3A, 3B, 3n) for deflecting said airfoil (2A, 2B, 2n) as a function of at least one deflection order, said deflection order illustrating an evolution of the deflection as a function of time;
c) at least one output curve is measured, illustrating the evolution as a function of time of a movement of the aircraft in response to the application of said deflection order to the airfoil (2A, 2B, 2n) during the flight; and
d) the deflection order applied to the airfoil (2A, 2B, 2n), and the measured corresponding output curve are recorded,
**characterized in that:**
- in step a):
• at least one output setpoint is received, making it possible to obtain at least one output curve which is identifying for at least one aerodynamic effect of the aircraft; and
• at least one airfoil deflection order which is induced by said output setpoint received is generated; and
- the aircraft is slaved in flight so as to obtain and maintain on said aircraft said identifying output curve, during the application of said deflection order induced by said output setpoint.

2. The method as claimed in claim 1,
**characterized in that** in step a), at least one airfoil deflection order is also received, which is applied as is to said airfoil (2A, 2B, 2n).

3. The method as claimed in one of claims 1 and 2,
**characterized in that**, to generate the deflection order induced by the output setpoint and to carry out the slaving, means which are formed on the basis of a socalled modal control theory are used.

4. The method as claimed in any one of claims 1 to 3,
**characterized in that**, to carry out a trial, said steps a) to d) and said slaving are implemented for a plurality of airfoils (2A, 2B, 2n) of the aircraft.

5. A device for carrying out at least one trial on an aircraft, said device (1) comprising:
- at least one airfoil (2A, 2B, 2n) of the aircraft, capable of being deflected so as to act on at least one piloting axis of the aircraft during a flight and comprising at least one actuator (3A, 3B, 3n) for deflecting said airfoil (2A, 2B, 2n) as a function of at least one deflection order received, which illustrates an evolution of the deflection as a function of time;
- a control unit (4) for transmitting to said actuator (3A, 3B, 3n) at least one deflection order to be applied to said airfoil (2A, 2B, 2n);
- means (6) for measuring at least one output curve illustrating the evolution as a function of time of a movement of the aircraft, in response to the application in flight of a deflection order to the airfoil (2A, 2B, 2n); and
- means (7) for recording at least one deflection order applied to the airfoil (2A, 2B, 2n) and the measured corresponding output curve,
**characterized in that:**
- said control unit (4) comprises:
• at least one first means (10) capable of receiving at least one output setpoint making it possible to obtain at least one output curve which is identifying for at least one aerodynamic effect of the aircraft; and
• at least one second means (11) for generating at least one airfoil deflection order which is induced by said output setpoint transmitted by said first means (10); and
- said device (1) comprises, moreover, at least one slaving means (13) for slaving the aircraft so as to obtain and maintain on said aircraft said identifying output curve, when the corresponding deflection order generated by said second means (11) is applied to the airfoil (2A, 2B, 2n).

6. The device as claimed in claim 5, **characterized in that** said control unit (4) comprises, moreover, a third means (15) for receiving at least one airfoil deflection order which is transmitted as is to the actuator (3A, 3B, 3n) of the airfoil (2A, 2B, 2n).

7. The device as claimed in one of claims 5 and 6, **characterized in that** said airfoil (2A, 2B, 2n) corresponds to one of the following elements of the aircraft:
- a spoiler;
- an aileron;
- a tailplane;
- an elevator; and
- a fin.

8. A method for carrying out a protocol of n in-flight trials on an aircraft, n being an integer greater than 1,
**characterized in that:**
- in a preliminary step, m airfoil deflection orders that must be applied directly to the aircraft and p output setpoints that make it possible to isolate at least one aerodynamic effect of the aircraft in the latter's temporal response, which is illustrated by at least one output curve, are determined, m and p being integers such that m + p = n;
- n trials are carried out, in the course at least of a subsequent flight of the aircraft, by applying respectively said m deflection orders and said p output setpoints, the latter also being applied in the form of representative deflection orders, said n trials being carried out by implementing the method specified under any one of claims 1 to 4 or by using the device specified under any one of claims 5 to 7; and
- for each of said n trials, the deflection order applied is recorded, and q corresponding output curves are measured and recorded, q being an integer.

9. A procedure for identifying aerodynamic phenomena on an aircraft, with the aid of a flight simulator, according to which procedure:
A/ at least one protocol of n in-flight trials is carried out, n being an integer, making it possible to obtain a plurality of n actual input curves representing deflection orders actually applied to the aircraft and a plurality of associated actual output curves;
B/ said n actual input curves are applied to said flight simulator;
C/ the corresponding output curves obtained in response to the application of said n actual input curves are measured on said flight simulator;
D/ said actual output curves and said corresponding output curves emitted by said flight simulator are compared pairwise; and
E/ a simulation model used by said flight simulator is refined on the basis of this comparison,
**characterized in that** in step A/, the method specified under claim 8 is implemented.

## Patentansprüche

1. Verfahren zur Durchführung mindestens eines Flugtests an einem Flugzeug, wobei bei dem Verfahren:
a) mindestens ein Ausschlagbefehl erzeugt wird, der auf mindestens eine Steuerfläche (2A, 2B, 2n) des Flugzeugs anzuwenden ist,
b) der Ausschlagbefehl während eines Fluges des Flugzeugs auf die Steuerfläche (2A, 2B, 2n) angewandt wird, die geeignet ist, derart ausgeschlagen zu werden, dass sie auf mindestens eine Steuerachse des Flugzeugs einwirkt und die mindestens einen Stellantrieb (3A, 3B, 3n) zum Auschlagen der Steuerfläche (2A, 2B, 2n) in Abhängigkeit von mindestens einem Ausschlagbefehl umfasst, wobei der Ausschlagbefehl eine Entwicklung des Ausschlags in Abhängigkeit von der Zeit darstellt,
c) mindestens eine Ausgangskurve gemessen wird, die die Veränderung in Abhängigkeit von der Zeit einer Bewegung des Flugzeugs im Ansprechen auf die Anwendung des Ausschlagbefehls auf die Steuerfläche (2A, 2B, 2n) während des Fluges darstellt und
d) der auf die Steuerfläche (2A, 2B, 2n) angewandte Ausschlagbefehl, sowie die entsprechende gemessene Ausgangskurve gespeichert werden,
**dadurch gekennzeichnet, dass:**
- in Schritt a):
• mindestens ein Ausgangssollwert empfangen wird, der es ermöglicht, mindestens eine Ausgangskurve zu erhalten, die für mindestens eine aerodynamische Wirkung des Flugzeugs kennzeichnend ist und
• mindestens ein Steuerflächen-Ausschlagbefehl erzeugt wird, der durch den empfangenen Ausgangssollwert hervorgerufen wird und
- das Flugzeug während des Fluges nachgeführt wird, um an dem Flugzeug während der Anwendung des von dem Ausgangssollwert hervorgerufenen Ausschlagbefehls die kennzeichnende Ausgangskurve zu erhalten und beizubehalten.

2. Verfahren nach Anspruch 1,
**dadurch gekennzeichnet, dass** in Schritt a) außerdem mindestens ein Steuerflächen-Ausschlagbefehl empfangen wird, der unverändert auf die Steuerfläche (2A, 2B, 2n) angewandt wird.

3. Verfahren nach Anspruch 1 oder 2,
**dadurch gekennzeichnet, dass** zum Erzeugen des von dem Ausgangssollwert hervorgerufenen Ausschlagbefehls und zur Durchführung des Nachführens Mittel verwendet werden, die ausgehend von einer sogenannten Theorie der modalen Regelung gebildet werden.

4. Verfahren nach einem der Ansprüche 1 bis 3,
**dadurch gekennzeichnet, dass** zum Durchführen eines Tests die Schritte a) bis d) und das Nachführen für eine Vielzahl von Steuerflächen (2A, 2B, 2n) des Flugzeugs ausgeführt werden.

5. Vorrichtung zur Durchführung mindestens eines Tests an einem Flugzeug, wobei die Vorrichtung (1) Folgendes umfasst:
- mindestens eine Steuerfläche (2A, 2B, 2n) des Flugzeugs, die geeignet ist, derart ausgeschlagen zu werden, dass sie während eines Fluges auf mindestens eine Steuerachse des Flugzeugs einwirkt und die mindestens einen Stellantrieb (3A, 3B, 3n) zum Auschlagen der Steuerfläche (2A, 2B, 2n) in Abhängigkeit von mindestens einem empfangenen Ausschlagbefehl umfasst, der eine Entwicklung des Ausschlags in Abhängigkeit von der Zeit darstellt,
- eine Steuereinheit (4), um mindestens einen auf die Steuerfläche (2A, 2B, 2n) anzuwendenen Ausschlagbefehl an den Stellantrieb (3A, 3B, 3n) zu übertragen,
- Mittel (6) zur Messung mindestens einer Ausgangskurve, die die Veränderung in Abhängigkeit von der Zeit einer Bewegung des Flugzeugs im Ansprechen auf die Anwendung eines Ausschlagbefehls auf die Steuerfläche (2A, 2B, 2n) während des Fluges darstellt und
- Mittel (7), um mindestens einen auf die Steuerfläche (2A, 2B 2n) angewandten Ausschlagbefehl und die entsprechende gemessene Ausgangskurve zu speichern,
**dadurch gekennzeichnet, dass:**
- die Steuereinheit (4) Folgendes umfasst:
• mindestens ein erstes Mittel (10), das geeignet ist, mindestens einen Ausgangssollwert zu empfangen, der es ermöglicht, mindestens eine Ausgangskurve zu erhalten, die für mindestens eine aerodynamische Wirkung des Flugzeugs kennzeichnend ist und
• mindestens ein zweites Mittel (11) zum Erzeugen mindestens eines Steuerflächen-Ausschlagbefehls, der durch den von dem ersten Mittel (10) übertragenen Ausgangssollwert hervorgerufen wird und
- die Vorrichtung (1) außerdem mindestens ein Mittel zum Nachführen (13) umfasst, um das Flugzeug derart nachzuführen, das an dem Flugzeug die kennzeichnende Ausgangskurve erhalten und beibehalten wird, wenn der entsprechende, von dem zweiten Mittel (11) erzeugte Ausschlagbefehl auf die Steuerfläche (2A, 2B, 2n) angewandt wird.

6. Vorrichtung nach Anspruch 5,
**dadurch gekennzeichnet, dass** die Steuereinheit (4) außerdem ein drittes Mittel (15) umfasst, um mindestens einen Steuerflächen-Ausschlagbefehl zu empfangen, der unverändert an den Stellantrieb (3A, 3B, 3n) der Steuerfläche (2A, 2B, 2n) übertragen wird.

7. Vorrichtung nach Anspruch 5 oder 6,
**dadurch gekennzeichnet, dass** die Steuerfläche (2A, 2B, 2n) einem der folgenden Elemente des Flugzeugs entspricht:
- einer Störklappe,
- einem Querruder,
- einer Höhenflosse
- einem Höhenruder und
- einem Seitenruder.

8. Verfahren zur Durchführung eines Protokolls von n Flugtests an einem Flugzeug,
wobei n eine ganze Zahl größer als 1 ist,
**dadurch gekennzeichnet, dass:**
- in einem vorgelagerten Schritt m Steuerflächen-Ausschlagbefehle bestimmt werden, die unmittelbar auf das Flugzeug angewandt werden müssen und p Ausgangssollwerte bestimmt werden, die es ermöglichen, mindestens eine aerodynamische Wirkung des Flugzeugs im Zeitverhalten des Letzteren, das durch mindestens eine Ausgangskurve dargestellt wird, zu isolieren, wobei m und p ganze Zahlen sind, so dass m + p = n,
- im Verlauf mindestens eines nachfolgenden Fluges des Flugzeugs n Tests unter Anwendung der m Ausschlagbefehle beziehungsweise der p Ausgangssollwerte durchgeführt werden, wobei Letztere außerdem in Form von repräsentativen Ausschlagbefehlen angewandt werden und wobei die n Tests durch Ausführen des unter einem der Ansprüche 1 bis 4 spezifizierten Verfahrens oder unter Verwendung der unter einem der Ansprüche 5 bis 7 spezifizierten Vorrichtung durchgeführt werden und
- für jeden der n Tests der angewandte Ausschlagbefehl gespeichert wird und q entsprechende Ausgangskurven gemessen und gespeichert werden, wobei q eine ganze Zahl ist.

9. Methode zur Identifizierung von aerodynamischen Phänomenen an einem Flugzeug mithilfe eines Flugsimulators, wobei gemäß der Methode:
A/ mindestens ein Protokoll von n Flugtests durchgeführt wird - wobei n eine ganze Zahl ist - die es ermöglichen, eine Vielzahl von n tatsächlichen Eingangskurven, die tatsächlich auf das Flugzeug angewandte Ausschlagbefehle repräsentieren und eine Vielzahl von zugeordneten tatsächlichen Ausgangskurven zu erhalten,
B/ die n tatsächlichen Eingangskurven auf den Flugsimulator angewandt werden,
C/ die im Ansprechen auf die Anwendung der n tatsächlichen Eingangskurven erhaltenen entsprechenden Ausgangskurven an dem Flugsimulator gemessen werden,
D/ die tatsächlichen Ausgangskurven und die entsprechenden von dem Flugsimulator ausgegebenen Ausgangskurven verglichen werden und
E/ in Abhängigkeit von diesem Vergleich ein von dem Flugsimulator verwendetes Simulationsmodell verfeinert wird,
**dadurch gekennzeichnet, dass** in Schritt A/ das unter Anspruch 8 spezifizierte Verfahren ausgeführt wird.
